# EUROPEAN PATENT SPECIFICATION

(11) **EP 4 495 177 B1**
(45) Date of publication and mention of the grant of the patent: **15.07.2026**
(21) Application number: 22938146.2
(22) Date of filing: 22.07.2022
(51) Int. Cl.: C08K 5/5313, C07F 9/30, C09K 21/12

(54) **PREPARATION METHOD FOR ALUMINUM DIETHYLPHOSPHINATE**
HERSTELLUNGSVERFAHREN FÜR ALUMINIUMDIETHYLESTERPHOSPHINAT
PROCÉDÉ DE PRÉPARATION DE DIÉTHYLPHOSPHINATE D'ALUMINIUM

(30) Priority: 21.04.2022 CN 202210422087
(43) Date of publication of application: 22.01.2025
(73) Proprietor: Lanzhou Ruipu Technology Co., Ltd, Lanzhou, Gansu 730207 (CN)
(72) Inventor: DOU, Wei, Lanzhou, Gansu 730207 (CN); XU, Hongwei, Lanzhou, Gansu 730207 (CN); LIU, Peng, Lanzhou, Gansu 730207 (CN); ZHOU, Yulai, Lanzhou, Gansu 730207 (CN)
(74) Representative: Wang, Bo
(86) International application number: PCT/CN2022/107247
(87) International publication number: WO 2023/201921

(56) References cited:
- CN-A- 103 221 416
- CN-A- 103 319 525
- CN-A- 106 832 911
- CN-A- 107 207 780
- CN-A- 113 454 154
- CN-A- 114 685 856
- US-A1- 2006 074 157
- US-A1- 2018 346 739
- US-A1- 2021 070 788

## Description

### FIELD OF TECHNOLOGY

The present invention relates to a preparation method for aluminum diethylphosphinate, and specifically relates to a preparation method for aluminum diethylphosphinate at least containing one odd carboalkyl chain telomer.

### BACKGROUND

Aluminum diethylphosphinate is a halogen-free flame retardant with good flame retardancy, and has been widely used in polyester materials, polyamide materials, EVA materials, and TPE materials by cooperating with other flame retardants. In documents, a large number of preparation methods for the material have been reported. For example, a large number of synthesis methods for aluminum diethylphosphinate and a sodium diethylphosphinate precursor thereof have been reported by Clariant Company, Guangzhou Goldmine, Shouguang Weidong Chemical, Jiangsu Liside, etc.

According to public data and patent information published by various companies, a method of using sodium hypophosphite to react with ethylene in acetic acid to obtain a sodium diethylhypophosphite solution has been disclosed in an early patent of Clariant, but the method leads to the introduction of acetic acid as an impurity into a final product of aluminum diethylphosphinate, thereby reducing the heat resistance of a polymer product. In a later reported patent, a sodium diethylhypophosphite solution is mainly obtained by a reaction of a sodium hypophosphite aqueous solution and ethylene at a certain pressure (6-12 kg) in the presence of an acidic additive (such as a sulfuric acid aqueous solution). Both the two methods essentially use a water-soluble oxidizing initiator to initiate the reaction, and both the acetic acid and the sulfuric acid aqueous solution achieve the effects that an acidic medium increases the solubility of ethylene, and that the protonation of hydrogen ions can stabilize phosphorus free radicals. Usually, the use amount of sulfuric acid is not low. According to public data, about 80 kilograms of concentrated sulfuric acid is consumed for the production of each ton of an aluminum diethylphosphinate product. Due to such a large amount of sulfuric acid, the yield is low when the sodium diethylhypophosphite solution as an intermediate produced by the method reacts with aluminum sulfate, a filtrate produced contains a large number of phosphorous compounds, and requirements of environmental protection for the treatment of phosphorous wastewater are difficult to meet. Meanwhile, the method has the following problems.
(1) A persulfate, as an initiator, is an oxidizing agent with a strong oxidizing ability, and in an acidic system, a part of sodium hypophosphite in a solution is oxidized into sodium phosphite or sodium phosphate by strong oxidation. Therefore, sodium ethylphosphate is generated after reacting with ethylene, and then aluminum ethylphosphate is generated after reacting with aluminum sulfate. A flame retardant effect of the aluminum ethophosphate is obviously poorer than that of a diethylphosphinate. Meanwhile, inorganic aluminum salts, such as aluminum phosphite or aluminum phosphate, may also be generated.
(2) The half-life of a persulfate initiation system is related to temperature. For example, commonly used potassium persulfate has a half-life of 7.7 hours at 70°C and has a half-life of 1.5 hours at 80°C. It is indicated that the higher temperature is better in order to achieve an initiation effect of the potassium persulfate and avoid an oxidation effect. Therefore, the temperature is higher than 90°C in currently reported synthesis methods.
(3) In order to realize a sufficient addition reaction of sodium hypophosphite and ethylene and avoid competition between an oxidation reaction and an ethylene addition reaction, the reaction pressure can be increased to increase the reaction rate, so as to realize addition of more hypophosphite radicals and ethylene as much as possible. However, a free radical reaction is an active reaction, and the increase of reaction pressure will cause a continuous reaction of the ethylene and generated diethylhypophosphite radicals, so as to generate a telomer. For example, an ethylethylhypophosphite will react with the ethylene to generate an ethyl-butylhypophosphite, or an ethyl-hexylhypophosphite, etc. The decrease of reaction pressure or decrease of an ethylene feed amount can reduce or avoid the production of the telomer, but will cause the generation of another byproduct, namely the generation of aluminum monoethylhypophosphite. The byproduct is superior to the presence of an active P-H bond and has poor thermal stability, which will reduce flame retardant characteristics of a main component. Thus, a method for synthesis at high pressure and an excess amount of ethylene is preferably selected by various companies. In a series of patents of Clariant Company, a flame retardant complex of aluminum diethylhypophosphite containing a telomer and a composition thereof with a polymer have been reported, and it has also been proposed that a dialkyl contained in the telomer may also be a C1-C8 combination in addition to a diethyl. However, from the perspective of a principle of a chemical reaction and types of raw materials, the core is actually a combination of even alkyl chains, such as ethylethyl, ethylbutyl, ethylhexyl, butylhexyl, etc. In embodiments, nuclear magnetic data also indicate that a structure includes a combination of even alkyl chains.

As exploration of low-pressure reaction conditions, it has been proposed by Jiangsu Liside New Materials Co., Ltd. in CN201410205424.1 that an organic solvent, such as butanol, is used as an additive, which can greatly and effectively reduce the reaction pressure and increase the safety and operability of a reaction process. The butanol is used to increase the solubility of ethylene in the system, which essentially plays a role of a phase transfer catalyst, but the butanol itself does not participate in a reaction. However, the method brings more trouble for water treatment in a later period, the butanol with a high boiling point and inflammability is difficult to remove in the reaction process of sodium diethylhypophosphite and aluminum sulfate, even in a salt treatment device, such as a multi-effect evaporator or an MVR device, and the water treatment can be performed after the butanol is removed. It has been proposed by Zhang Baogui, et al., in Tianjin University that the pressure of a reaction system can be decreased to 0.5 MPa or below by using acetone as an initiator in acetic acid under the initiation of ultraviolet light. The method is easy to implement in a laboratory, but difficult to implement in production, and the light conversion efficiency is usually low. Once equipment is enlarged, many practical problems will be brought. For example, stainless steel reactors need to use quartz tubes to pass through ultraviolet light, such that sealing and pressure resistance are difficult to solve. Meanwhile, the system needs to use acetic acid as a solvent, which brings various problems, such as an unacceptable odor in a production process, increase of the process of removing the acetic acid solvent by distillation, decrease of the thermal stability of a polymer during downstream use, etc.

In summary, problems to be solved by the present invention are as follows:
(1) the use of a nearly neutral aqueous solution as a reaction system can reduce the corrosion of reaction equipment, and meanwhile can reduce the pressure of concentrated brine treatment in a later period;
(2) the use of a non-strong oxidizing, cheap and easily available initiator can reduce the possibility of producing byproducts by the system;
(3) whether an additive or an initiator can be used in a next reaction without treatment or after simple treatment as much as possible after completion of a reaction.

The contents of the background section are only technologies known to the inventor and shall not certainly represent the prior art in the field.

US 2018/346739 A1 discloses a process for producing a polymeric flame-retardant mixture comprising a step of incorporating nanoparticulate dialkylphosphinic salts containing 0% to 20% by weight of telomers into an oligomer without catalysts. US 2006/074157 A1 discloses a preparation method for flame-retardant polymer molding compositions, which comprises mixing dialkylphosphinic salts and/or flame-retardant compositions with polymer pellets and optional additives in a mixer, homogenizing them in a polymer melt at relatively high temperatures in a compounding assembly, then drawing off the homogenized polymer extrudate, cooling it and dividing it into portions. CN 106832911 A relates to a preparation method for flame-retardant polyamide 66.

### SUMMARY

The inventor of the present application unexpectedly finds that the system can undergo an adequate reaction at relatively low temperature and pressure by using a non-strong oxidizing initiator to initiate the reaction of ethylene and sodium hypophosphite to obtain sodium diethylphosphinate under microwave conditions. Meanwhile, it is also found that a reaction product includes a telomer, the telomer type has a different production reason from currently reported telomers, and the category of the produced telomer is also different from reported types. In addition, at a pressure proposed by the present invention, excess ethylene rarely participates in a generation reaction of the telomer.

The present invention provides a preparation method for aluminum diethylphosphinate, including the following steps:
S1: heating a sodium hypophosphite solution to a first temperature, dropwise adding an initiator, introducing ethylene, and maintaining a pressure at 0.30-0.75 MPa, preferably maintaining the pressure at 0.30-0.50 Mpa; and carrying out an initiation reaction using microwaves until the reaction is completed; wherein the initiator is a methyl ketone initiator; and
S2: adjusting the solution obtained in S1 to a second temperature, dropwise adding an aluminum sulfate solution for a reaction under heat preservation at normal pressure, performing filtration, and collecting a precipitate to obtain aluminum diethylphosphinate containing a telomer; the telomer is: 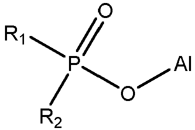
   wherein R₁ is CH₃-, C₃H₇-, C₅H₁₁-, or C₇H₁₃-;
   R₂ is C₂H₅-, C₄H₉-, or C₆H₁₃-; the R₁ and the R₂ are independent of each other; and a sum of weight percentages of the aluminum diethylphosphinate and the telomer is 100%.

The ethylene, as a preferred gas, is always introduced at a constant pressure. Accordingly, when the pressure of the system no longer changes, it can be judged that the reaction is completed and reaches a reaction endpoint.

In the system of the present invention, methyl, propyl and other groups produced by the initiator may react with phosphorus to produce a main product, namely an ethyl-ethyl product, and a small amount of methyl-ethyl, propyl-ethyl and other telomers at least containing one odd carboalkyl chain.

As can be predicted, the alkyl chain generated above may be a liner chain, and may also be a branched chain.

According to one aspect of the present invention, in Step S1, the initiator is a mixture of one or more than two of methyl methyl ketone, methyl ethyl ketone, and methyl propyl ketone.

When the initiator is methyl methyl ketone, free radicals initiated by microwaves are methyl free radicals, the obtained telomers mainly include a methylethylhypophosphite and a propylethylhypophosphite, and a molar relationship between the two telomers is 20:1.

When the initiator is methyl ethyl ketone, free radicals initiated by microwaves are methyl free radicals and ethyl free radicals, the obtained telomers mainly include a methylethylhypophosphite and a propylethylhypophosphite, and a molar relationship between the two telomers is 20:1.

When the initiator is methyl propyl ketone, free radicals initiated by microwaves are methyl free radicals and propyl free radicals, the obtained telomers mainly include a methylethylhypophosphite and a propylethylhypophosphite, and a molar relationship between the two telomers is 10:1.

According to one aspect of the present invention, in Step S1, a weight ratio of the initiator to the sodium hypophosphite is (0.1-15.0): 100; preferably, the weight ratio is (0.5-12.0):100; most preferably, the weight ratio is (1.0-8.0):100; and/or
the content of the telomer generated by a reaction is controlled by adjusting an addition amount of the methyl ketone initiator, and a weight ratio of the initiator to the generated telomer is 1:(0.4-0.8).

According to one aspect of the present invention, in Step S1, the first temperature is 40-105°C; preferably 40-85°C; and most preferably 55-80°C.

For the initiation reaction carried out using microwaves, the reaction temperature does not affect the occurrence of the reaction. However, when the temperature is too low, the reaction rate is slightly lower. When the temperature is too high, energy is wasted. The main point of the present invention is that the reaction can be carried out when the temperature is not too high.

According to one aspect of the present invention, in Step S1, a concentration of the sodium hypophosphite solution is 102-309 g/l, preferably 150-250 g/L. When the concentration of the sodium hypophosphite solution is too low, low production efficiency is caused. When the concentration is too high, the concentration of the system is too high, the viscosity is large, and meanwhile, the reaction time becomes longer.

A molar ratio of the ethylene to the sodium hypophosphite is 1.95:1 to 2.10:1, preferably 2.0:1 to 2.05:1. When too little ethylene is introduced, the reaction is incomplete, a part of monoethylhypophosphites are produced, and the purity and temperature resistance of the product is reduced. When too much ethylene is introduced, waste of ethylene is caused.

According to one aspect of the present invention, in Step S2, the second temperature is 55-105°C, preferably 65-95°C. Herein, a heat preservation reaction at normal pressure is carried out. When the temperature is higher, boiling is caused. When the temperature is too low, the reaction speed is too low. Moreover, the second temperature determines the particle size of the precipitated final product in the present invention. When the temperature is higher, the particle size is larger. However, when the temperature is too high and is greater than 95°C, the particle size increase rate becomes less obvious. When the temperature is greater than 105°C, the particle size obtained is uneven. When the temperature is less than 55°C, the particle size is small but even. However, the particle growth rate is too low, complete precipitation is difficult to achieve, the production efficiency is low, the product yield is low, and the temperature is not suitable for practical production. When the temperature is 65°C or above, the particle growth rate is obviously increased. Therefore, when the second temperature is controlled at 65-95°C in the present invention, not only is the growth rate of product particles ensured, but also uniform growth of the particles is realized, and the temperature is an optimal operating temperature for controlling the process of precipitating the particles in the present invention. An optimal temperature range of 55-105°C is used in the present invention, which can also achieve effects of the present invention.

A heat preservation time is 2-12 h, preferably 2-5 h. When the time is less than 2 h, the reaction is incomplete. When the time is greater than 12 h, time and energy are wasted by the already complete reaction.

A molar ratio of the aluminum sulfate to the sodium hypophosphite is 2.05:3.0 to 2.1:3.0. Calculation and production are performed according to the molar ratio of the aluminum sulfate to the sodium hypophosphite at 2:3. Usually, in order to ensure that the reaction is sufficient, the aluminum sulfate is added at a slightly larger amount, that is, a cheap material is added at a larger amount.

A concentration of the aluminum sulfate solution is 8-40%, preferably 10-20%.

When the concentration of the aluminum sulfate is higher than 40%, a sodium sulfate byproduct of the system is wrapped in the product, resulting in insufficient purity. When the concentration of the aluminum sulfate is lower than 8%, the reaction system is too thin, and the production efficiency is low.

The present invention further provides an aluminum diethylphosphinate at least containing one odd carboalkyl chain structure telomer, which is prepared by the above method.

A design principle of the method of the present invention is as follows:
In Step S1, the initiator is a methyl ketone initiator.

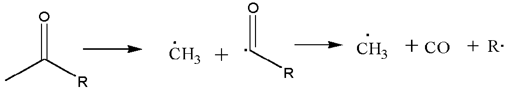

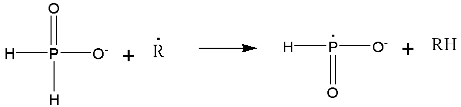

Under microwave radiation, the methyl ketone initiator generates methyl free radicals and acyl free radicals, alkyl free radicals initiate hypophosphite radicals to produce phosphorus free radicals, and the phosphorus free radicals undergo addition with ethylene to generate an alkylphosphine compound, so as to initiate the subsequent reaction.

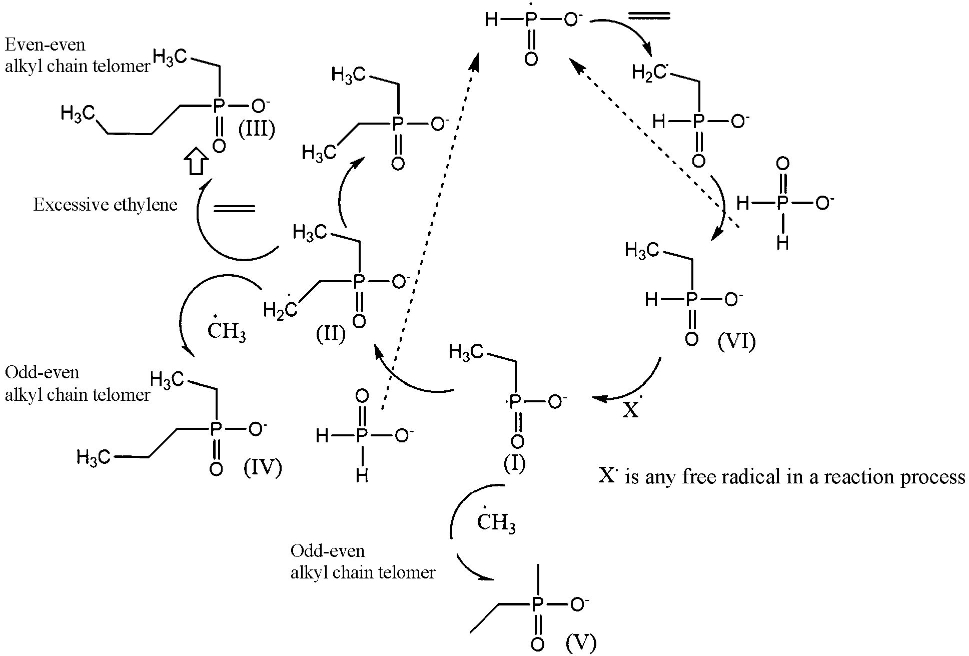

The reaction is a gas-liquid reaction, and the ethylene has relatively small solubility in water and a relatively small chance to contact with the reaction raw material, sodium hypophosphite. Thus, under normal conditions, the ethylene enters the pre-configured sodium hypophosphite solution through pressure in the reaction, and the ethylene is constantly introduced. Therefore, the ethylene is generally not excessive. It is found through research that at an initial stage of the reaction, the product basically includes an intermediate of a structural formula (VI), that is, a monoethylphosphonite telomer. At a later stage of the reaction, the intermediate is continuously initiated to react with the ethylene to obtain a series of intermediates. The intermediate (I) binds to methyl free radicals to generate a methylethylphosphonite telomer. The intermediate (II) can not only react with methyl to generate a propylethylphosphonite telomer, but also react with the ethylene to generate a series of even-even carbon chain phosphonite telomers, such as an ethylbutylphosphonite telomer, an ethylhexylphosphonite telomer, a butylhexylphosphonite telomer, etc., at the later stage of the reaction when the ethylene is gradually excessive and the sodium hypophosphite is insufficient. Especially under the conditions of higher temperature and higher pressure, the production of such telomers is essentially inevitable. At present, persulfates or azo and peroxide compounds are used as initiators in most of prevailing reaction systems, produced free radicals initiate reactions to similarly experience the intermediates, such as (VI), (I), (II), etc., and when the ethylene is excessive or the pressure is too high, a telomer with a structure (III) will also be produced, but telomers with structures (IV) and (V) will not be produced.

When the reaction pressure is not high enough and the ethylene entering the solution system is not excessive, the free radical intermediate, due to activity, will priorly react with free radicals produced in the system, especially such as methyl free radicals, to generate an ethylpropylhypophosphite (IV), and will even continue to react to obtain an ethylpentylhypophosphite, an ethylheptylhypophosphite, a butylpropylhypophosphite, and a hexylpropyl hypophosphite. As can be predicted, alkyl chains generated above may be liner chains, or may also be branched chains. Due to the reasons of the activity and stability of free radicals under the reaction conditions of lower temperature and lower pressure in the present invention, the telomers mainly include odd-even alkyl chain hypophosphite telomers, especially a methylethylhypophosphite telomer and a propylethylhypophosphite telomer.

The present invention has the following beneficial effects.
(1) According to the present invention, an initiator with strong oxidability is not used, such that oxidation of a hypophosphite in a reaction system and subsequent products brought thereby are reduced, for example, aluminum phosphate, aluminum phosphite, aluminum ethylphosphonate and the like are not generated as a result of the reaction.
(2) The present invention can be implemented at a relatively low temperature and a relatively low pressure, realizing high-efficiency conversion.
(3) The present invention is easy to operate and uses water as a solvent, hazardous materials requiring disposal are not generated or contained after completion of a chemical reaction, raw materials are readily available, and industrial production can be achieved without the need for special devices.

### BRIEF DESCRIPTION OF THE DRAWINGS

Accompanying drawings for providing further understanding of the present invention and forming a part of the description are used to illustrate the present invention together with embodiments of the present invention, rather than to form limitations of the present invention. In the accompanying drawings:
FIG. 1 shows DSC analysis results of a product in Example 1;
FIG. 2 shows DSC analysis results of a product in Comparative Example 4;
FIG. 3 shows ¹H NMR spectra in Comparative Examples 1, 2, and 3;
FIG. 4 shows ¹H NMR spectra of the products in Example 1 and Comparative Example 4;
FIG. 5 is a detailed diagram of the ¹H NMR spectra of the products in Example 1 and Comparative Example 4 in FIG. 4;
FIG. 6 shows ¹³C NMR spectra of the products in Example 1 and Comparative Example 4; and
FIG. 7 is a detailed diagram of FIG. 6.

### DESCRIPTION OF THE EMBODIMENTS

Herein after, only some exemplary embodiments are briefly described. Therefore, the accompanying drawings and descriptions are considered to be essentially exemplary rather than restrictive.

The following disclosure provides a number of different embodiments or examples for achieving different effects of the present invention. In order to simplify the disclosure of the present invention, components and settings of particular examples are described below. Certainly, those are only examples and are not intended to limit the present invention. In addition, the present invention may repeat reference numbers and/or reference letters in different examples, and such repetition is for the purposes of simplification and clarity without indicating a relationship between the various embodiments and/or settings discussed. In addition, the present invention provides examples of various specific processes and materials, but those of ordinary skill in the art may be aware of applications of other processes and/or use of other materials.

Preferred embodiments of the present invention are described below in conjunction with the accompanying drawings. It should be understood that the preferred embodiments described herein are only used to illustrate and explain the present invention, rather than to limit the present invention.

A preparation method for aluminum diethylphosphonite of the present invention is as follows:
A sodium hypophosphite solution is configured into a 102-309 g/L solution and heated to 40-105°C, an initiator is slowly added dropwise, ethylene is introduced after replacing air with nitrogen or an inert gas, a pressure is maintained at 0.30-0.75 MPa, and a microwave generator placed in a reactor is turned on to start a reaction. After the reaction for 5 h, whether the reaction is completed is detected every 30 min. After the reaction is completed, a reaction with aluminum sulfate is carried out.

A reaction product obtained above is reacted with aluminum sulfate. Specifically, a reaction solution obtained above is maintained at a temperature of 55-105°C, an aluminum sulfate hexadecahydrate with a concentration of 8-40 wt% is added dropwise into the reactor within 120 min at normal pressure, a white precipitate is gradually precipitated, filtration is performed after 2-12 h, and the white precipitate is washed with hot water and then dried under vacuum at 120°C to obtain aluminum diethylphosphonite containing a telomer.

The initiator is a methyl ketone initiator. Specifically, the initiator is a mixture of one or more than two of methyl methyl ketone, methyl ethyl ketone, and methyl propyl ketone.

A weight ratio of the initiator to the sodium hypophosphite is (0.1-15.0):100.

The content of the telomer generated by a reaction is controlled by adjusting an addition amount of the methyl ketone initiator, and a weight ratio of the initiator to the generated telomer is 1:(0.4-0.8).

A molar ratio of the ethylene to the sodium hypophosphite is 1.95:1 to 2.10:1.

A molar ratio of the aluminum sulfate to the sodium hypophosphite is 2.05:3.0 to 2.1:3.0.

The telomer is: 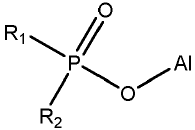
wherein R₁ is CH₃-, C₃H₇-, C₅H₁₁-, or C₇H₁₃-;
R₂ is C₂H₅-, C₄H₉-, or C₆H₁₃-; and the R₁ and the R₂ are independent of each other.

### Comparative Example 1:

A sodium hypophosphite solution was configured into a 227 g/L solution and heated to 65°C, a sodium persulfate solution was added dropwise after replacing air with nitrogen, ethylene was introduced, a pressure was maintained at 0.40 MPa, and a reaction was started. After the reaction for 5 h, whether the reaction was completed was detected every 30 min. A reaction solution obtained was maintained at a temperature of 90°C, an aluminum sulfate hexadecahydrate solution (a molar ratio of the aluminum sulfate to the sodium hypophosphite was 2:3) with a concentration of 25 wt% was added dropwise into a reactor within 120 min, and a white precipitate was gradually precipitated. After completion of the dropping, a heat preservation reaction was continuously carried out for 3 h, filtration was performed, washing was performed with hot water, and drying was performed under vacuum at 120°C. A yield was 98% (calculated based on phosphorus).

### Comparative Example 2:

A sodium hypophosphite solution was configured into a 227 g/L solution and heated to 65°C, a sodium persulfate solution was added dropwise after replacing air with nitrogen, ethylene was introduced, a pressure was maintained at 1.2 MPa, and a reaction was started. After the reaction for 5 h, whether the reaction was completed was detected every 30 min. A method of reacting with aluminum sulfate was the same as that in Comparative Example 1. A yield was 97% (calculated based on phosphorus).

### Comparative Example 3:

A sodium hypophosphite solution was configured into a 227 g/L solution and heated to 95°C, a sodium persulfate solution was added dropwise after replacing air with nitrogen, ethylene was introduced, a pressure was maintained at 1.2 MPa, and a reaction was started. After the reaction for 5 h, whether the reaction was completed was detected every 30 min. A method of reacting with aluminum sulfate was the same as that in Comparative Example 1. A yield was 96% (calculated based on phosphorus).

### Comparative Example 4:

Commercially available OP1230 of Clariant was used.

Some specific preferred embodiments of the present invention are provided below.

### Example 1:

A sodium hypophosphite solution was configured into a 227 g/L solution and heated to 75°C, 1.5 wt% of methyl ethyl ketone (calculated based on sodium hypophosphite) was slowly added dropwise, ethylene was introduced after replacing air with nitrogen, a pressure was maintained at 0.45 MPa, and a microwave generator placed in a reactor was turned on to start a reaction. After the reaction for 5 h, whether the reaction was completed was detected every 30 min. A reaction solution obtained was increased to 90°C, and a method of reacting with aluminum sulfate was the same as that in Comparative Example 1. A yield was 96% (calculated based on phosphorus).

### Example 2:

A sodium hypophosphite solution was configured into a 227 g/L solution and heated to 75°C, 4.5 wt% of methyl propyl ketone (calculated based on sodium hypophosphite) was slowly added dropwise, ethylene was introduced after replacing air with nitrogen, a pressure was maintained at 0.45 MPa, and a microwave generator placed in a reactor was turned on to start a reaction. After the reaction for 5 h, whether the reaction was completed was detected every 30 min. A reaction solution obtained was increased to 90°C, and a method of reacting with aluminum sulfate was the same as that in Comparative Example 1. A yield was 98% (calculated based on phosphorus).

### Example 3:

A sodium hypophosphite solution was configured into a 227 g/L solution and heated to 75°C, 2.5 wt% of acetone (calculated based on sodium hypophosphite) was slowly added dropwise, ethylene was introduced after replacing air with nitrogen, a pressure was maintained at 0.45 MPa, and a microwave generator placed in a reactor was turned on to start a reaction. After the reaction for 5 h, whether the reaction was completed was detected every 30 min. A reaction solution obtained was increased to 90°C, and a method of reacting with aluminum sulfate was the same as that in Comparative Example 1. A yield was 99% (calculated based on phosphorus).

Examples 4-9: According to the solution in Example 1, in addition to that a ratio of an initiator to sodium hypophosphite was 2%, 4%, 6%, 8%, 10%, or 12%, others were the same as those in Example 1.

**Table 1**

| Weight percentage of an initiator to sodium hypophosphite | Content of a telomer (wt%) |
|---|---|
| 2% | 1.6% |
| 4% | 2.8% |
| 6% | 3.9% |
| 8% | 5.3% |
| 10% | 6.7% |
| 12% | 8.5% |

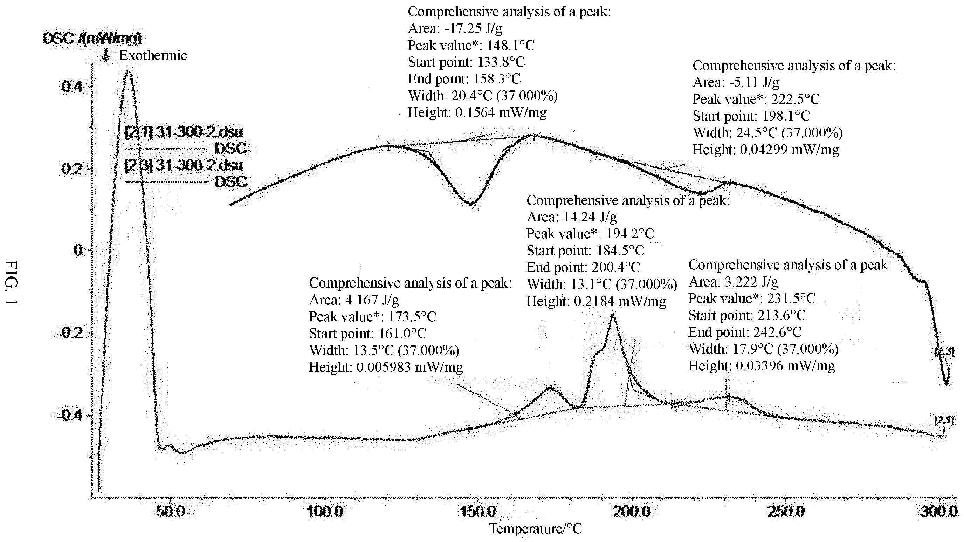

FIG. 1 shows DSC analysis results of a product in Example 1. As can be seen from FIG. 1, positions of endothermic peaks of the product include 174°C, 194°C, and 232°C.

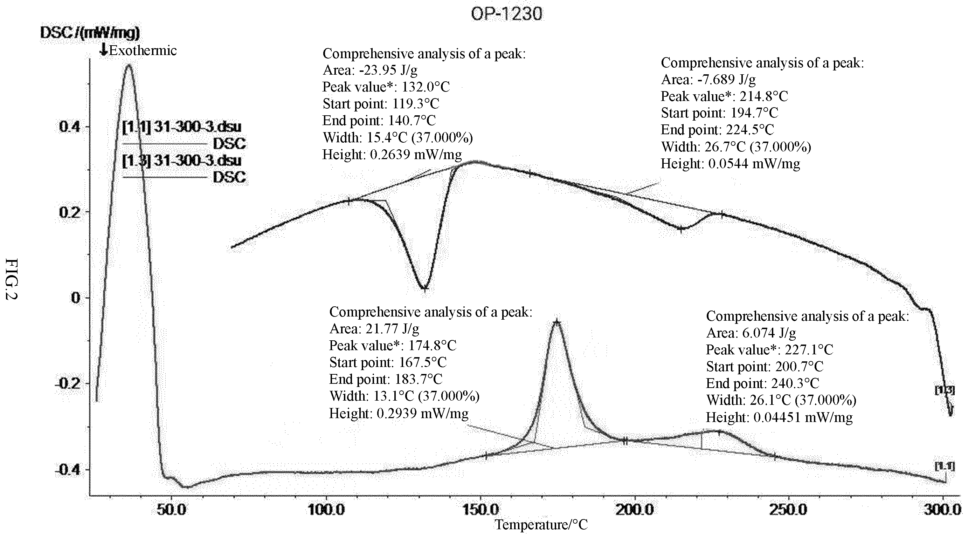

FIG. 2 shows DSC analysis results of a product in Comparative Example 4. As can be seen from the figure, positions of endothermic peaks of the product include 175°C and 225°C. By comparing FIG. 1 and FIG. 2, it can be seen that the two products have obvious differences in the endothermic peaks.

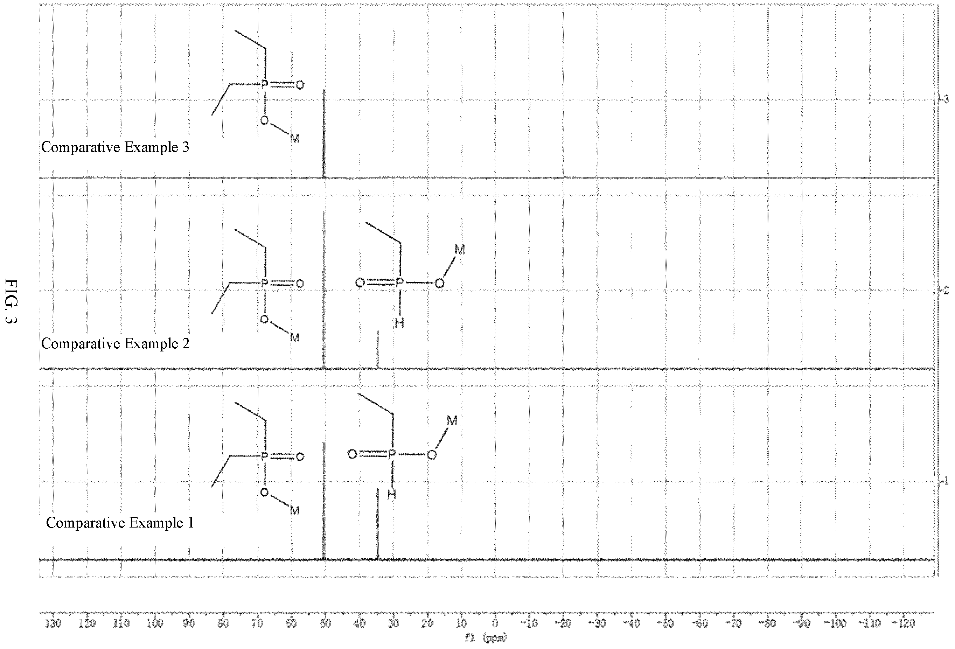

FIG. 3 shows ¹H NMR spectra in Comparative Examples 1, 2, and 3. It can be seen that the reaction is incomplete at a lower pressure or a lower temperature. In Comparative Example 3, the reaction is more complete at a higher reaction temperature and a higher reaction pressure.

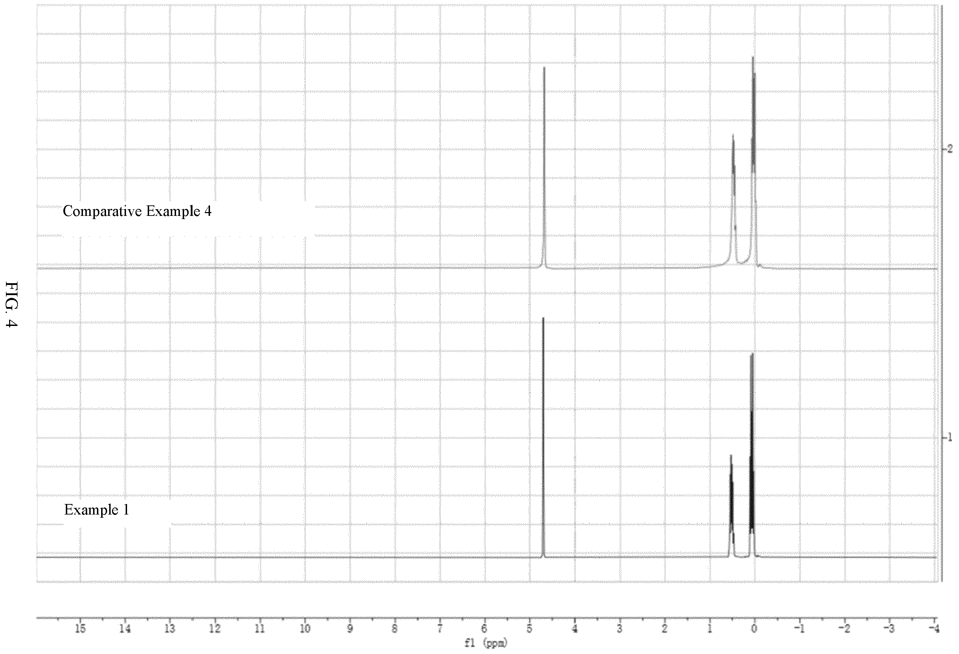

FIG. 4 shows ¹H NMR spectra of the products in Example 1 and Comparative Example 4. In general, it can be seen that the two products have same main components.

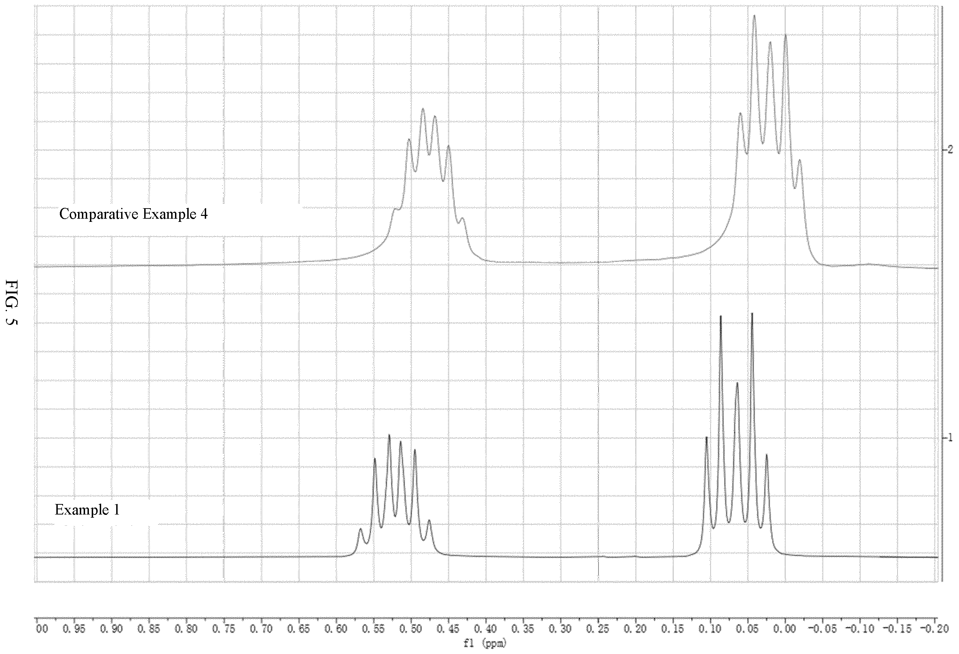

FIG. 5 is a detailed diagram of the ¹H NMR spectra of the products in Example 1 and Comparative Example 4 in FIG. 4. It can be seen that cleavage of a methyl group has obvious differences at -0.1 ppm to 0.15 ppm, and chemical shift values have differences.

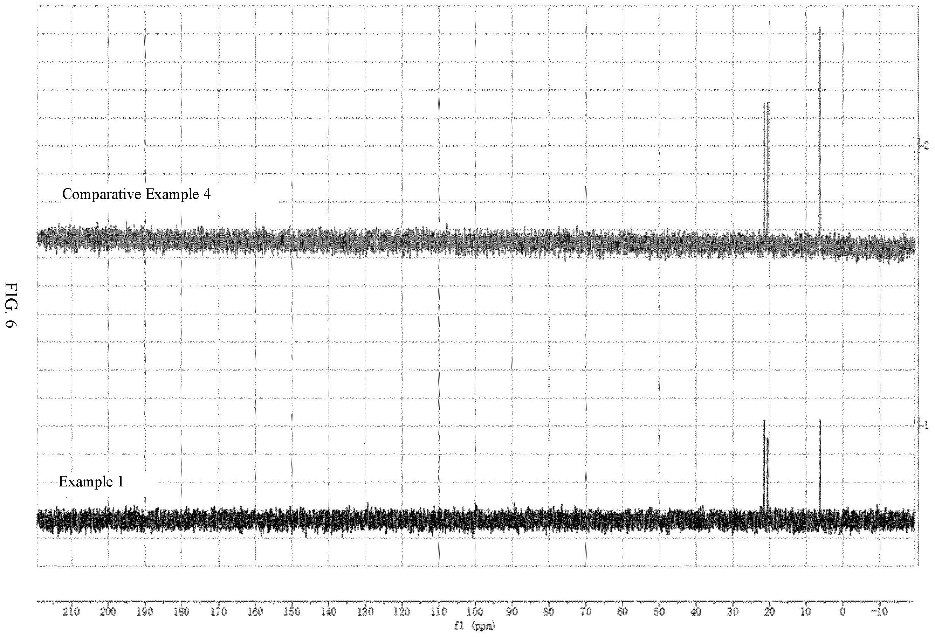

FIG. 6 shows ¹³C NMR spectra of the products in Example 1 and Comparative Example 4.

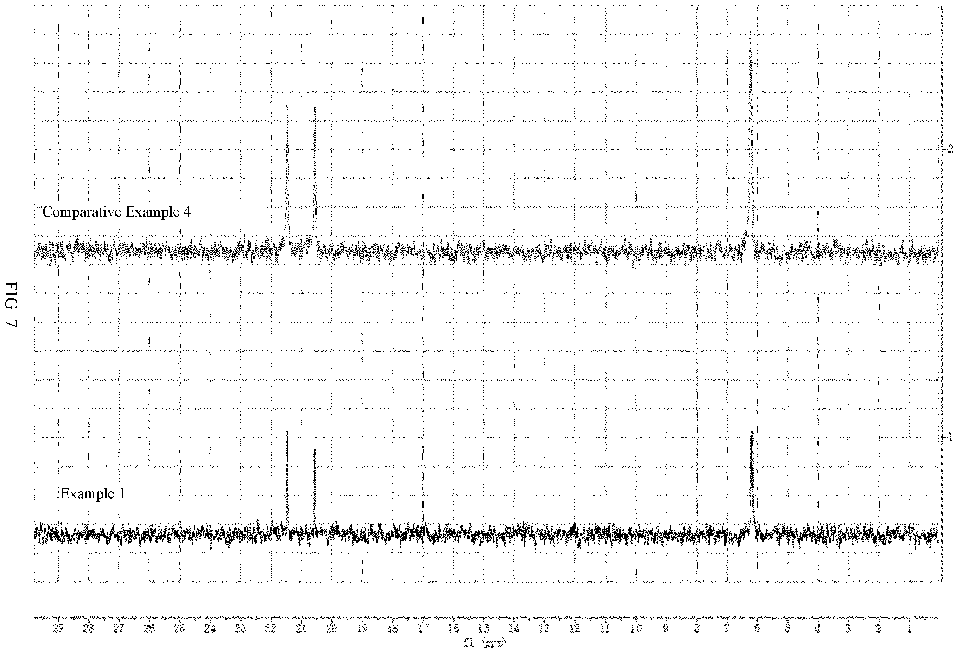

FIG. 7 is a detailed diagram of FIG. 6. As can be seen through comparison, alkyl substituents of the products in Example 1 and Comparative Example 4 have obvious differences in relative intensity (two peaks at 20-22 ppm).

Examples 10-14: According to the solution in Example 1, in addition to that a first temperature was 40°C, 55°C, 80°C, 85°C, or 105°C, others were the same as those in Example 1.

Finally, it should be noted that the descriptions above are only preferred embodiments of the present invention, and are not intended to limit the present invention.

## Claims

1. A preparation method for aluminum diethylphosphinate, **characterized in that** the preparation method comprises the following steps:
S1: heating a sodium hypophosphite solution to a first temperature, dropwise adding an initiator, introducing ethylene, and maintaining a pressure at 0.30-0.75 MPa; and carrying out an initiation reaction using microwaves until the reaction is completed; wherein the initiator is a methyl ketone initiator; and
S2: adjusting the solution obtained in S1 to a second temperature, dropwise adding an aluminum sulfate solution for a reaction under heat preservation at normal pressure, performing filtration, and collecting a precipitate to obtain aluminum diethylphosphinate containing a telomer, wherein the telomer is: 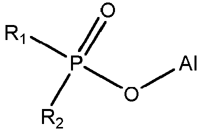
wherein R₁ is CH₃-, C₃H₇-, C₅H₁₁-, or C₇H₁₃-;
R₂ is C₂H₅-, C₄H₉-, or C₆H₁₃-; the R₁ and the R₂ are independent of each other; and a sum of weight percentages of the aluminum diethylphosphinate and the telomer is 100%.

2. The preparation method according to claim 1, **characterized in that** in the flame retardant mixture, a weight percentage content of the telomer is 0.1-9%.

3. The preparation method according to claim 1, **characterized in that** in Step S1, the initiator is a mixture of one or more than two of methyl methyl ketone, methyl ethyl ketone, and methyl propyl ketone.

4. The preparation method according to claim 1, **characterized in that** in Step S1, a weight ratio of the initiator to the sodium hypophosphite is (0.1-15.0):100; and/or
a weight ratio of the initiator to the generated telomer is 1:(0.4-0.8).

5. The preparation method according to claim 4, **characterized in that** in Step S1, a weight ratio of the initiator to the sodium hypophosphite is (1.0-8.0):100.

6. The preparation method according to claim 1, **characterized in that** in Step S1, the first temperature is 40-105°C.

7. The preparation method according to claim 1, **characterized in that** in Step S1, the first temperature is 55-80°C.

8. The preparation method according to claim 1, **characterized in that** in Step S1, a concentration of the sodium hypophosphite solution is 102-309 g/l; and
a molar ratio of the ethylene to the sodium hypophosphite is 1.95:1 to 2.10:1.

9. The preparation method according to claim 8, **characterized in that** in Step S1, a concentration of the sodium hypophosphite solution is 150-250 g/L.

10. The preparation method according to claim 8, **characterized in that** a molar ratio of the ethylene to the sodium hypophosphite is 2.0:1 to 2.05:1.

11. The preparation method according to any one of claims 1-4, **characterized in that** in Step S2, the second temperature is 55-105°C;
a heat preservation time is 2-12 h;
a molar ratio of the aluminum sulfate to the sodium hypophosphite is 2.05:3.0 to 2.1:3.0; and
a concentration of the aluminum sulfate solution is 8-40%.

12. The preparation method according to claim 11, **characterized in that** in Step S2, the second temperature is 65-95°C;
a heat preservation time is 2-5 h; and
a concentration of the aluminum sulfate solution is 10-20%.

## Patentansprüche

1. Verfahren zur Herstellung von Aluminiumdiethylphosphinat, **dadurch gekennzeichnet, dass** das Herstellungsverfahren die folgenden Schritte umfasst:
Schritt 1: Erhitzen einer Natriumhypophosphitlösung auf eine erste Temperatur, tropfenweise Zugabe eines Initiators, Einleiten von Ethylen und Aufrechterhalten eines Drucks von 0,30 bis 0,75 MPa; sowie Durchführen einer Initiierungsreaktion unter Einsatz von Mikrowellen, bis die Reaktion abgeschlossen ist; wobei der Initiator ein Methylketon-Initiator ist; und
S2: Einstellen der in S1 erhaltenen Lösung auf eine zweite Temperatur, tropfenweise Zugabe einer Aluminiumsulfatlösung zur Reaktion unter Wärmeerhaltung bei Normaldruck, Durchführen einer Filtration und Gewinnen eines Niederschlags, um Aluminiumdiethylphosphinat zu erhalten, das ein Telomer enthält, wobei das Telomer ist: 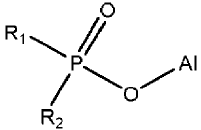
wobei R1 CH3-, C3H7-, C5H11- oder C7H13- ist;
R2 C2H5-, C4H9- oder C6H13- ist; R1 und R2 voneinander unabhängig sind; und die Summe der Gewichtsprozente des Aluminiumdiethylphosphinats und des Telomers 100 % beträgt.

2. Herstellungsverfahren nach Anspruch 1, **dadurch gekennzeichnet, dass** in der flammhemmenden Mischung der Gewichtsanteil des Telomers 0,1-9 % beträgt.

3. Herstellungsverfahren nach Anspruch 1, **dadurch gekennzeichnet, dass** in Schritt S1 der Initiator eine Mischung aus einem oder mehreren der folgenden Stoffe ist: Methylmethylketon, Methylethylketon und Methylpropylketon.

4. Herstellungsverfahren nach Anspruch 1, **dadurch gekennzeichnet, dass** in Schritt S1 das Gewichtsverhältnis von Initiator zu Natriumhypophosphit (0,1-15,0):100 beträgt; und/oder
das Gewichtsverhältnis von Initiator zu dem erzeugten Telomer 1:(0,4-0,8) beträgt.

5. Herstellungsverfahren nach Anspruch 4, **dadurch gekennzeichnet, dass** in Schritt S1 das Gewichtsverhältnis von Initiator zu Natriumhypophosphit (1,0-8,0):100 beträgt.

6. Herstellungsverfahren nach Anspruch 1, **dadurch gekennzeichnet, dass** in Schritt S1 die erste Temperatur 40-105 °C beträgt.

7. Herstellungsverfahren nach Anspruch 1, **dadurch gekennzeichnet, dass** in Schritt S1 die erste Temperatur 55-80 °C beträgt.

8. Herstellungsverfahren nach Anspruch 1, **dadurch gekennzeichnet, dass** in Schritt S1 die Konzentration der Natriumhypophosphitlösung 102-309 g/l beträgt; und
das Molverhältnis von Ethylen zu Natriumhypophosphit 1,95:1 bis 2,10:1 beträgt.

9. Herstellungsverfahren nach Anspruch 8, **dadurch gekennzeichnet, dass** in Schritt S1 die Konzentration der Natriumhypophosphitlösung 150-250 g/l beträgt.

10. Herstellungsverfahren nach Anspruch 8, **dadurch gekennzeichnet, dass** das Molverhältnis von Ethylen zu Natriumhypophosphit 2,0:1 bis 2,05:1 beträgt.

11. Herstellungsverfahren nach einem der Ansprüche 1 bis 4, **dadurch gekennzeichnet, dass** in Schritt S2 die zweite Temperatur 55-105 °C beträgt;
die Wärmespeicherzeit 2-12 h beträgt;
das Molverhältnis von Aluminiumsulfat zu Natriumhypophosphit 2,05:3,0 bis 2,1:3,0 beträgt; und
die Konzentration der Aluminiumsulfatlösung 8-40 % beträgt.

12. Herstellungsverfahren nach Anspruch 11, **dadurch gekennzeichnet, dass** in Schritt S2 die zweite Temperatur 65-95 °C beträgt;
die Wärmespeicherzeit 2-5 h beträgt; und
die Konzentration der Aluminiumsulfatlösung 10-20 % beträgt.

## Revendications

1. Procédé de préparation de diéthylphosphinate d'aluminium, **caractérisé en ce que** le procédé de préparation comprend les étapes suivantes :
Étape 1 : chauffer une solution d'hypophosphite de sodium à une première température, ajouter goutte à goutte un initiateur, introduire de l'éthylène, et maintenir une pression entre 0,30 et 0,75 MPa ; et effectuer une réaction d'initiation à l'aide de micro-ondes jusqu'à ce que la réaction soit terminée ; dans lequel l'initiateur est un initiateur de méthylcétone ; et
Étape 2 : ajuster la solution obtenue à l'étape 1 à une deuxième température, ajouter goutte à goutte une solution de sulfate d'aluminium pour une réaction sous maintien thermique à pression normale, effectuer une filtration, et collecter un précipité pour obtenir du diéthylphosphinate d'aluminium contenant un télomère, dans lequel le télomère est : 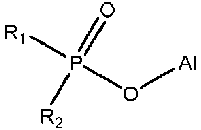
dans lequel R₁ est CH₃₋, C₃H₇₋, C₅H₁₁₋, ou C₇H₁₃₋ ;
R₂ est C₂H₅₋, C₄H₉₋, ou C₆H₁₃₋ ; lesdits R₁ et R₂ sont indépendants l'un de l'autre ; et une somme des pourcentages en poids du diéthylphosphinate d'aluminium et du télomère est de 100 %.

2. Procédé de préparation selon la revendication 1, **caractérisé en ce que**, dans le mélange ignifuge, une teneur en pourcentage en poids du télomère est de 0,1 à 9 %.

3. Procédé de préparation selon la revendication 1, **caractérisé en ce que**, à l'étape 1, l'initiateur est un mélange d'un ou de plusieurs éléments parmi la méthylméthylcétone, la méthyléthylcétone et la méthylpropylcétone.

4. Procédé de préparation selon la revendication 1, **caractérisé en ce que**, à l'étape 1, un rapport pondéral de l'initiateur à l'hypophosphite de sodium est de (0,1 à 15,0) : 100 ; et/ou
un rapport pondéral de l'initiateur au télomère généré est de 1 : (0,4 à 0,8).

5. Procédé de préparation selon la revendication 4, **caractérisé en ce que**, à l'étape 1, un rapport pondéral de l'initiateur à l'hypophosphite de sodium est de (1,0 à 8,0) : 100.

6. Procédé de préparation selon la revendication 1, **caractérisé en ce que**, à l'étape 1, la première température est de 40 à 105 °C.

7. Procédé de préparation selon la revendication 1, **caractérisé en ce que**, à l'étape 1, la première température est de 55 à 80 °C.

8. Procédé de préparation selon la revendication 1, **caractérisé en ce que**, à l'étape 1, une concentration de la solution d'hypophosphite de sodium est de 102 à 309 g/L ; et
un rapport molaire de l'éthylène à l'hypophosphite de sodium est de 1,95 : 1 à 2,10 : 1.

9. Procédé de préparation selon la revendication 8, **caractérisé en ce que**, à l'étape 1, une concentration de la solution d'hypophosphite de sodium est de 150 à 250 g/L.

10. Procédé de préparation selon la revendication 8, **caractérisé en ce que** un rapport molaire de l'éthylène à l'hypophosphite de sodium est de 2,0 : 1 à 2,05 : 1.

11. Procédé de préparation selon l'une quelconque des revendications 1 à 4, **caractérisé en ce que**, à l'étape 2, la deuxième température est de 55 à 105 °C ;
un temps de maintien thermique est de 2 à 12 h ;
un rapport molaire du sulfate d'aluminium à l'hypophosphite de sodium est de 2,05 : 3,0 à 2,1 : 3,0 ; et
une concentration de la solution de sulfate d'aluminium est de 8 à 40 %.

12. Procédé de préparation selon la revendication 11, **caractérisé en ce que**, à l'étape 2, la deuxième température est de 65 à 95 °C ;
un temps de maintien thermique est de 2 à 5 h ; et
une concentration de la solution de sulfate d'aluminium est de 10 à 20 %.
